# EUROPEAN PATENT SPECIFICATION

(11) **EP 3 576 222 B1**
(45) Date of publication and mention of the grant of the patent: **07.12.2022**
(21) Application number: 19175611.3
(22) Date of filing: 21.05.2019
(51) Int. Cl.: H01Q 1/24, H01Q 13/10, H01Q 5/50, H01Q 9/42, H01Q 5/335

(54) **ELECTRONIC DEVICE AND ANTENNA COMPONENT THEREOF**
ELEKTRONISCHE VORRICHTUNG UND ANTENNENKOMPONENTE DAFÜR
DISPOSITIF ÉLECTRONIQUE ET COMPOSANT D'ANTENNE CORRESPONDANT

(30) Priority: 29.05.2018 CN 201810533925
(43) Date of publication of application: 04.12.2019
(73) Proprietor: Beijing Xiaomi Mobile Software Co., Ltd., Beijing 100085 (CN)
(72) Inventor: GUO, Fang, Beijing, Beijing 100085 (CN)
(74) Representative: dompatent von Kreisler Selting Werner - Partnerschaft von Patent- und Rechtsanwälten mbB

(56) References cited:
- CN-A- 105 244 599
- CN-A- 107 204 509
- CN-A- 107 425 258
- CN-U- 204 596 970
- US-A1- 2016 164 168
- US-A1- 2017 244 153
- MOORE SAMUEL K: "Super-accurate GPS coming to smartphones in 2018 [News]", IEEE SPECTRUM, IEEE INC. NEW YORK, US, vol. 54, no. 11, 1 November 2017 (2017-11-01), pages 10-11, XP011672548, ISSN: 0018-9235, DOI: 10.1109/MSPEC.2017.8093787 [retrieved on 2017-11-01]

## Description

### TECHNICAL FIELD

The present disclosure generally relates to the antenna technology field, and more particularly, to an electronic device and an antenna component thereof.

### BACKGROUND

With increasing use of electronic devices, such as mobile phones and tablet computers in people's daily life, people are constantly putting forward new demands on structure and function of the electronic devices, such as requiring a smaller device, a larger screen-to-body ratio, a metal housing with a better hand feeling.

However, a change in the structure or the function of an electronic device may affect performance of an antenna component, thereby affecting the basic communication function of the electronic device and reducing user experience.

Reference document US 2016/164168 A1 discloses an antenna module and a mobile terminal having the same, and the antenna module may include a first conductive member connected to a feeding portion and a grounding portion, a second conductive member disposed to be separated from the first conductive member, a first connecting member configured to connect the first conductive member to the second conductive member at a position adjacent to the feeding portion, and a second connecting member configured to connect the first conductive member to the second conductive member at a position adjacent to the grounding portion, wherein a slit is formed on the first conductive member, and the slit is formed between the feeding portion and the grounding portion.

Reference document CN 204596970 U discloses a mobile terminal. The mobile terminal includes: a casing; a printed circuit board disposed in the casing, including a main circuit area and a clearance area, wherein the clearance area is located below the main circuit area; The metal frame of the casing includes a first frame and a second frame on both sides of the casing, and a third frame on the bottom of the casing. The third frame has a first side seam and a second side seam. The frame between two side slits form the main radiator of the antenna; one end of a first connector is connected to the main radiator of the antenna; another end of the first connector is connected to a first end of a feed matching network and another end of the feed matching network is connected to a feed port in the main circuit area, and the first connector and the feed matching network are set in the clear area.

Reference document CN 105 244599 A discloses an antenna comprising a main floor, a first ground lug, a second ground lug, a breakpoint, a first metal arm, a second metal arm, an antenna unit and a feed source, wherein the first ground lug is respectively connected with a first position in a metal middle frame of the mobile terminal and the main floor; the second ground lug is respectively connected with a second position in the metal middle frame and the main floor; the breakpoint is arranged on the metal middle frame; the first metal arm is formed by the metal middle frame between the first position and the breakpoint; the second metal arm is formed by the metal middle frame between the second position and the breakpoint; the antenna unit is arranged between one end of the first metal arm close to the breakpoint and the main floor; and the feed source is connected with the antenna unit and the main floor respectively and arranged between the antenna unit and the main floor.

Reference document CN 107425258 A discloses to an antenna system and a mobile terminal. The antenna system comprises a metal frame, a mainboard, a first conductive element, a second conductive element, a three-in-one antenna unit and a diversity antenna unit. The mainboard comprises a system ground, a first radio frequency feed end and a second radio frequency feed end. The three-in-one antenna unit is connected with the first radio frequency feed end. The diversity antenna unit is connected with the second radio frequency feed end. The metal frame comprises a radiation part and a grounding part which are arranged separately. A slot area is arranged between the radiation part and the grounding part. The three-in-one antenna unit and the diversity antenna unit are connected with the radiation part through the first conductive element and the second conductive element. The radiation part is equipped with a first grounding point and a second grounding point which are connected with the system ground. The first grounding point and the second grounding point are arranged between the diversity antenna unit and the three-in-one antenna unit.

Reference document US 2017/244153 A1 discloses an electronic device. The electronic device includes a housing including a front face having a substantially rectangular shape and facing in a first direction, a rear face having a substantially rectangular shape and facing in a second direction that is opposite to the first direction, and first to fourth side face members that enclose a space between the front face and the rear face, wherein at least a portion of the first to fourth side face members is formed of a conductive material, a touch screen display exposed through the front face, and at least one wireless communication circuit arranged within the housing. The rear face includes a substantially flat conductive plate that constitutes a substantial portion of the rear face, and an elongated non-conductive strip that encloses the conductive plate when viewed from above the rear face, and extends along the first to fourth side face members.

Reference document CN107204509 A discloses an electronic device and an antenna structure. The antenna structure is used for the electronic device having a conductive frame; the conductive frame is provided with two breaking joints for the antenna structure to realize signal radiation; a feed point of the antenna structure is positioned near a first conductive frame segment which is formed on the conductive frame and the feed point is electrically connected to the first conductive frame segment, wherein a feeder line connected to the feed point is connected to a first capacitor with a preset specification in series in order to reduce a low frequency bandwidth lower limit of the antenna structure.

Reference document MOORE SAMUEL K: "Super-accurate GPS coming to smartphones in 2018" [News] discloses L5 signals are so sharp that the reflections are unlikely to overlap with the most direct signal. The receiver chip can simply ignore any signal after the first one it receives, which is the shortest path. The Broadcom chip also uses information embedded in the phase of the carrier signal to improve accuracy.

### SUMMARY

The present disclosure provides a method, a device and an electronic device, to solve disadvantages in the related art.

According to a first aspect of embodiments of the present disclosure, there is provided an antenna component for use in an electronic device according to claim 1

According to a preferred embodiment of the present disclosure, there is provided an electronic device according to claim 5.

The technical solutions provided in embodiments of the present disclosure may include following advantageous effect.

It can be seen from the above embodiments that, in the present disclosure, by using radiation capability of the conductive frame, forming the groove by the conductive frame, the slit, and the first ground element, cooperating with the signal generation circuit (electrically connected to the feed point), the L5 band signal and the L1 band signal may be generated in case of utilizing only one feed point, thus improving performance of the antenna component, and reducing occupation of the internal space of the electronic device.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating a conductive frame not being part of the present invention.
Fig. 2 is a schematic diagram illustrating a conductive frame not being part of the present invention.
Fig. 3 is a schematic diagram illustrating a signal generation circuit not being part of the present invention.
Fig. 4 is a schematic diagram illustrating a signal generation circuit not being part of the present invention.
Fig. 5 is a schematic diagram illustrating return loss of a four-frequency antenna not being part of the present invention.
Fig. 6 is a schematic diagram illustrating a conductive frame not being part of the present invention.
Fig. 7 is a schematic diagram illustrating a conductive frame not being part of the present invention.
Fig. 8 is a schematic diagram illustrating a conductive frame according to an exemplary embodiment of the present disclosure.
Fig. 9 is a schematic diagram illustrating a signal generation circuit according to another exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

Terms such as first, second or third may be used to describe various information but the information is not limited by the above terminologies. The above terminologies are used to distinguish one type of information from the other type of information, for example, first information may be referred to as second information without departing from a scope in accordance with the concept of the present disclosure and similarly, second information may be referred to as first information. As used herein, the term "if' may be construed to mean "when" or "upon" or "in response to determining" depending on the context.

With development of information technology, the technology of satellite positioning system has made great progress and is fully utilized in electronic devices such as smart phones and tablet computers. In order to improve positioning accuracy of satellite navigation, a GPS (Global Positioning System) signal with a frequency band of 1176.45 MHz (L5 band signal) has been added as a civilian signal on the basis of an original working frequency band. Correspondingly, in order to improve the positioning accuracy of an electronic device, it is also necessary to add a corresponding frequency band in the electronic device.

In the related art, on the basis of the original frequency band of the electronic device, the electronic device supports the L5 band signal by adding an antenna operating on the L5 band signal. However, a specification size of the electronic device is limited for user demands such as portability. Although the addition of the antenna can support the L5 band signal, it takes up too much space inside the electronic device. Further, in the case of limited internal space, the newly added antenna seriously occupies radiation space of an original antenna. For example, the frequency difference between the L1 band signal (1.575 GHz) and the L5 band signal is small, resulting in poor isolation between antennas operating on the L1 band signal and the L5 band signal. The newly added antenna (the antenna operating on the L5 band signal) seriously affects performance of the antenna operating on the original L1 band signal.

Therefore, the present disclosure aims to solve above technical problems existing in the related art by improving a manner of generating the L5 band signal. An antenna component according to embodiments of the present disclosure is applied to an electronic device, including two parts: a conductive frame and a signal generation circuit. In the following, the conductive frame and the signal generation circuit will be respectively described in detail with reference to specific scenarios and drawings.

### 1. The conductive frame

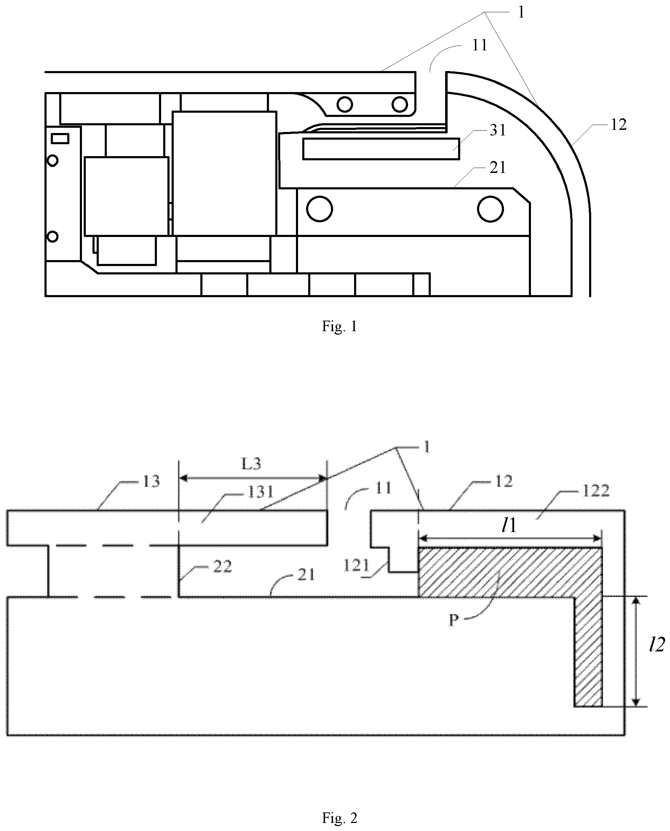

Fig. 1, not being part of the present invention, is a schematic diagram illustrating a conductive frame. As illustrated in Fig. 1, the conductive frame 1 may be a metal frame of the electronic device. What is illustrated in Fig. 1 is an upper right corner of the electronic device. The conductive frame 1 includes a first conductive frame section 12 and a second conductive frame section. The first conductive frame section 12 and the second conductive frame section are formed by splitting the conductive frame with a slit 11 of the conductive frame. The slit 11 is configured to implement signal radiation of the antenna component. The first conductive frame section 12 is formed by splitting the conductive frame with the slit. A feed point (not shown) is provided on the first conductive frame section 12 near the slit 11. The first conductive frame section 12 includes an extension portion from the feed point to an end away from the slit 11, and a groove is formed by the extension portion and a first ground element 21. The first ground element 21 may include any one of a frame of the electronic device, a screen module, and a printed-circuit board.

Fig. 2, not being part of the present invention, is a specification diagram of, the metal structure in Fig. 1. As illustrated in Fig. 2, the first conductive frame section 12 includes an extension portion 122 from a feed point 121 to the end away from the slit 11, i.e., a right direction in Fig. 2. A groove P is formed by the extension portion 122 and the first ground element 21. A length of the groove P is, e.g., no less than 20 mm. It should be noted that, a shape of the groove P in the antenna component varies with a position of the antenna component. For example, the conductive frame illustrated in Fig. 1 and Fig. 2 is an upper top portion of the electronic device, thus the formed groove P is an "L" shape. Certainly, the groove P may be any other shapes, which is not limited in the present disclosure.

### 2. The signal generation circuit

The signal generation circuit is electronically connected to the feed point 121 in Fig. 2. The signal generation circuit is configured to generate an L5 band signal when a signal source is input to the signal generation circuit, such that the groove P generates an L1 band signal. It can be seen that the antenna component may generate the L5 band signal and the L1 band signal in a case of using only one feed point, without a need to newly add an antenna operating on the L5 band signal to realized support of the L5 band signal by the electronic device, thus saving internal space of the electronic device. At the same time, a problem of squeezing the radiation space of the original antenna (the antenna operating on the L1 band signal) due to the newly added antenna (the antenna operating on the L5 band signal) is avoided, thereby improving the performance of the antenna component.

Composition of the signal generation circuit will be described in detail with reference to circuit diagrams in the following.

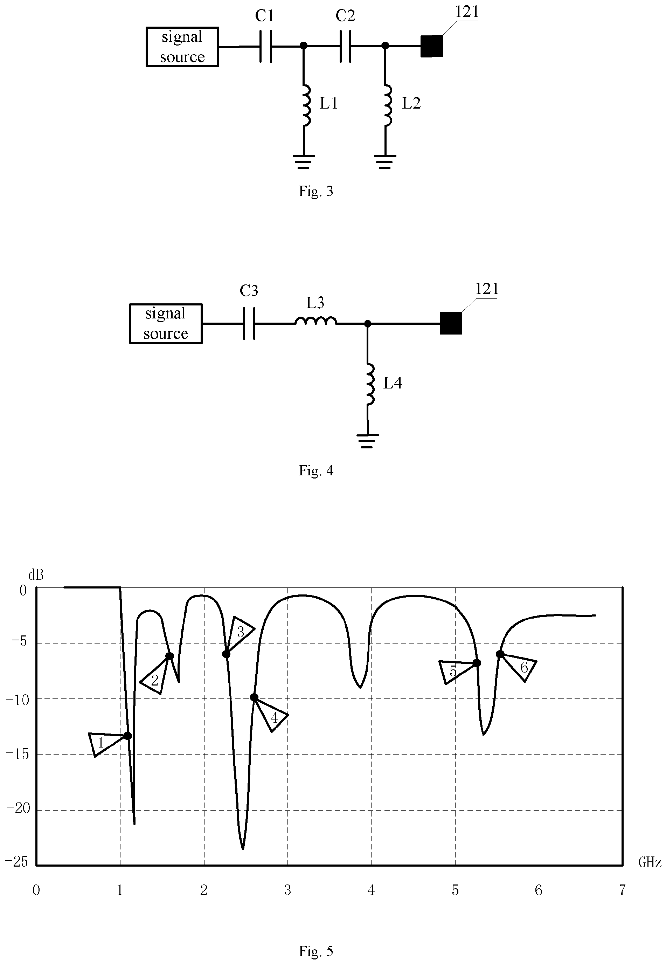

As illustrated in Fig. 3, not being part of the present invention, the signal generation circuit may include a first capacitor C1, a second capacitor C2, a first inductor L1, and a second inductor L2. The first capacitor C1 is connected to the second capacitor C2 in series, and the first capacitor C1 is connectable to a signal source. The second capacitor C2 is connected between the feed point 121 and the first capacitor C1. A first end (i.e., an upper end of L1 illustrated in Fig. 3) of the first inductor L1 is connected to a first end (i.e., a left end of C2 illustrated in Fig. 3) of the second capacitor C2, a second end (i.e., a lower end of L1 illustrated in Fig. 3) of the first inductor L1 is grounded. A first end (i.e., an upper end of L2 illustrated in Fig. 3) of the second inductor L2 is connected to a second end (i.e., a right end of C2 illustrated in Fig. 3) of the second capacitor C2, a second end (i.e., a lower end of L2 illustrated in Fig. 3) of the second inductor L2 is connected to the ground.

For example, parameter values of respective components in the signal generation circuit illustrated in Fig. 3 may be for the first capacitor C1 between 0.2 pF - 1.2 pF, preferably between 0.5 pF - 0.9 pF and most preferably 0.7 pF. The capacity of the second capacitor C2 is between 0.3 pF - 1.3 pF, more preferably between 0.6 pF - 1.0 pF and most preferably 0.8 pF. The inductance of the first inductor L1 is between 5 nH - 10 nH, more preferably 6.5 nH - 8.5 nH and most preferably 7.5 nH. The inductance of the second inductor L2 is between 7.5 nH - 12.5 nH, more preferably 9 nH - 11 nH and most preferably 10 nH. The parameter values of the respective components in the single generation circuit illustrated in Fig. 3 may be most preferably set as Table 1.

**Table 1**

| component | value |
|---|---|
| first capacitor C1 | 0.7 pF |
| second capacitor C2 | 0.8 pF |
| first inductor L1 | 7.5 nH |
| second inductor L2 | 10 nH |

As illustrated in Fig. 4, not being part of the present invention, the signal generation circuit may include a third capacitor C3, a third inductor L3, and a fourth inductor L4. The third capacitor C3 is connectable to the signal source. The third inductor L3 is connected to the third capacitor C3 in series, and is connected between the feed point 121 and the third capacitor C3. A first end (i.e., an upper end of L4 illustrated in Fig. 4) of the fourth inductor L4 is connected to a first end (i.e., a right end of L3 illustrated in Fig. 4) of the third inductor L3, in which the first end of the third inductor L3 is closer to the feed point 121 than a second end of the third inductor L3, a second end (i.e., a lower end of L4 illustrated in Fig. 4) of the fourth inductor L4 is grounded.

For example, parameter values of respective components in the signal generation circuit illustrated in Fig. 4 may be for the third capacitor C3 between 0.5 pF - 1.5 pF, more preferably between 0.8 pF - 1.2 pF and most preferably 1 pF. The inductance of the third inductor L3 is between 5.5 nH - 10.7 nH, preferably between 7.2 nH - 9.2 nH and most preferably 8.2 nH. The inductance for the fourth inductor L4 is between 7.5 nH - 12.5 nH, more preferably between 9 nH - 11 nH and most preferably 10 nH. Most preferably, the parameter values of the respective components in the signal generation circuit illustrated in Fig. 4 may be set as Table 2.

**Table 2**

| component | value |
|---|---|
| third capacitor C3 | 1 pF |
| third inductor L3 | 8.2 nH |
| fourth inductor L4 | 10 nH |

It should be noted that, parameter values of respective components in the signal generation circuit illustrated in Fig. 3 and Fig. 4 may be flexibly adjusted according to practical situation, which is not limited in the present disclosure.

Structure operating on a Wi-Fi signal (including a 2.4GHz band signal and 5GHz band signal) may further be added based on the above-mentioned antenna component, thus realizing a structure of four-frequency antenna, i.e., generating all of the L5 band signal, the L1 band signal, the 2.4 GHz band signal, and the 5GHz band signal, by using only one feed point. For example, by controlling parameter values of respective components, return loss of the four-frequency antenna may be adjusted as illustrated in Fig. 5. Coordinates of respective points illustrated in Fig. 5 may be set as Table 3.

**Table 3**

| point | coordinate |
|---|---|
| 1 | (1.176,-13.576) |
| 2 | (1.5943,-7.3602) |
| 3 | (2.4,-6.1204) |
| 4 | (2.5,-10.116) |
| 5 | (5.1235,-7.2976) |
| 6 | (5.4155,-6.3856) |

With the four-frequency antenna structure, internal space of the electronic device may be saved. At the same time, the problem of squeezing the radiation space of the original antenna caused by newly added antenna, thus improving performance of the antenna component. Technical solutions for generating the 5GHz band signal and the 2.4GHz band signal will be described in the following.

### 1. 5GHz band signal

If the signal source is input to the signal generation circuit, the groove P illustrated in Fig. 2 may be further configured to generate a 5GHz band signal. As an example, a fundamental mode of the groove P may be configured to generate the L1 band signal, and a high order mode of the groove P may be configured to generate the 5GHz band signal. Certainly, a shape and a length (which, e.g., is no less than 20 mm) of the groove P may be flexibly set according to practical situation, which is not limited herein.

### 2. 2.4GHz band signal

### 1) Second conductive frame section 13

In the antenna component, the 2.4GHz band signal may be generated by a second conductive frame section 13 formed by splitting the conductive frame 1 with the slit 11. As illustrated in Fig. 2, the second conductive frame section 13 is electronically connected to a second ground element 22. The second ground element 22 may include any one of a frame of the electronic device, a screen module, and a printed-circuit board. It should be noted that, the first ground element 21 and the second ground element 22 may be a same ground element or different ground elements independent of each other. When the first ground element 21 and the second ground element 22 are different ground elements independent of each other, electric potentials of the first ground element 21 and the second ground element 22 are equal, and they are equal to an electric potential of ground in the signal generation circuit.

For a length of a portion 131 (in an extending direction of the second conductive frame section 13) of the second conductive frame section 13 exceeding beyond the second ground element 22, there may be two cases.

### (1) The length of the portion 131 is less than a preset threshold.

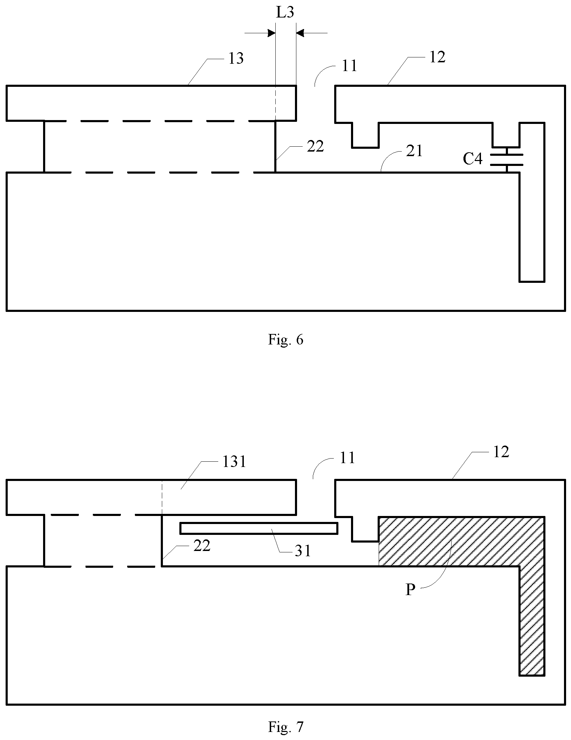

As illustrated in Fig. 6, not being part of the present invention, in the extending direction (i.e., a landscape orientation illustrated in Fig. 6) of the second conductive frame section 13, when the length L3 (i.e., a landscape orientation length of the portion 131) of the portion of the second conductive frame section 13 exceeding beyond the second ground element 22 is less than the preset threshold, support of the 2.4GHz band signal may be realized by adding a new capacitor between the first conductive frame 12 and the ground. As an exemplary configuration, the antenna component may further include a fourth capacitor C4. A first end (i.e., an upper end of C4 illustrated in Fig. 6) of the fourth capacitor C4 is connected to the first conductive frame section 12, and a second end (i.e., a lower end of C4 illustrated in Fig. 6) of the fourth capacitor C4 is connected to the ground. It should be noted that, positions of the first conductive frame 12 and the fourth capacitor C4 may be flexibly set according to practical situation, which is not limited in the present disclosure. For example, as illustrated in Fig. 6, the fourth capacitor C4 may be connected to a middle portion of the first conductive frame 12. A specific value of the fourth capacitor C4 may be flexibly set according to practical situation, which is not limited in the present disclosure. For example, the fourth capacitor C4 may be between 0.5 pF - 1.5 pF, more preferably between 0.8 pF - 1.2 pF and most preferably 1 pF.

For a grounding manner, a lower end of the fourth capacitor C4 may be connected to the first ground element 21. In addition, a specific value of the preset threshold may be flexibly set according to practical situation, which is not limited in the present disclosure. For example, the preset threshold may be between 3 mm - 8mm and may be set to 5mm, 6.2mm, etc.

### (2) The length of the portion 131 is greater than a preset length.

As illustrated in Fig. 2, in the extending direction (i.e., a landscape orientation illustrated in Fig. 2) of the second conductive frame section 13, when the length of the portion of the second conductive frame section 13 exceeding beyond the second ground element 22 is greater than the preset length, that is, a landscape orientation length of the portion 131 is greater than the preset length, support of the 2.4GHz band signal may be realized by the portion 131. As an example, in the extending direction of the second conductive frame section 13, the length of the portion of the second conductive frame section 13 exceeding beyond the second ground element 22 is greater than the preset length. If the signal source is input to the signal generation circuit, the portion 131 of the second conductive frame section 13 exceeding beyond the second ground element 22 is configured to generate a 2.4GHz band signal. A specific value of the preset length may be flexibly set according to practical situation, which is not limited in the present disclosure. For example, the preset length is no less than 10mm.

In some examples, frequencies of respective signals generated by the antenna component may be slightly adjusted by adding a conductive branch. As an example , as illustrated in Fig. 2 and Fig. 7, the antenna component may further include a conductive branch 31. The conductive branch 31 is located between the first ground element 21 and the portion 131 of the second conductive frame section 13 exceeding beyond the second ground element 22. When the signal source is input to the signal generation circuit, a distance between the conductive branch 31 and the second conductive frame section 13 and a length of the conductive branch 31 in a preset direction are associated with a frequency of any one of signals generated by the signal generation circuit, the groove P, and the portion 131 of the second conductive frame section 11 exceeding beyond the second ground element 22.

For example, as illustrated in Fig. 7, not being part of the present invention, the closer the distance between the conductive branch 31 and the second conductive frame section 13 is, the lower the frequency of any one of the signals generated by the signal generation circuit, the groove P, and the portion 131 is. The greater a vertical length (also understood as a width of the conductive branch 31) of the conductive branch 31 is, the lower the frequency of any one of the signals generated by the signal generation circuit, the groove P, and the portion 131 is. The greater a landscape length (also understood as a length of the conductive branch 31) of the conductive branch 31 is, the lower the frequency of any one of the signals generated by the signal generation circuit, the groove P, and the portion 131 is. The conductive branch 31 may be any one of a metal piece, a LDS (laser direct structuring) pattern (i.e., a pattern directly formed by laser forming), and a FPC (flexible printed circuit).

### 2) The signal generation circuit

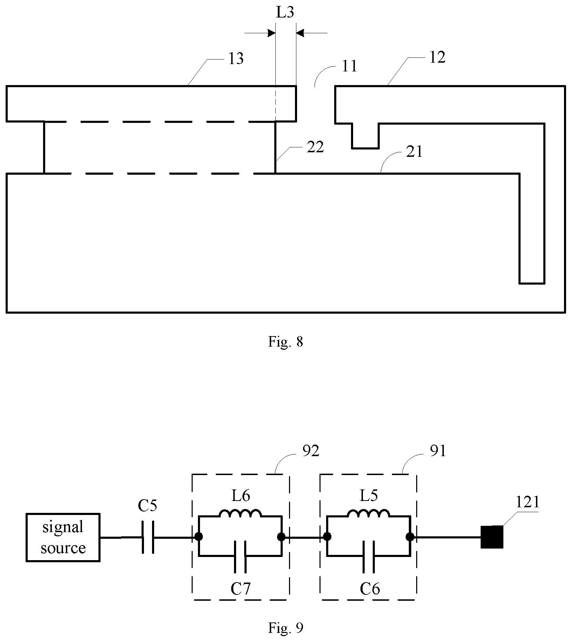

In an embodiment, the 2.4 GHz band signal is generated by the signal generation circuit. That is, the signal generation circuit generates the 2.4 GHz band signal when the signal source is input to the signal generation circuit. Thus, as illustrated in Fig. 8, the length L3 of the portion 131 may be set less than the preset threshold, and there is no need for the fourth capacitor C4 to generate the signal of 2.4 GHz.

As illustrated in Fig. 9, the signal generation circuit includes a first resonance circuit 91, a second resonance circuit 92 and a fifth capacitor C5. The first resonance circuit 91 is connected to the second resonance circuit 92 in series, and the first resonance circuit 91 is connected between the feed point 121 and the second resonance circuit 92. The second resonance circuit 92 is connected to the fifth capacitor C5 in series. The first resonance circuit 91 includes a sixth capacitor C6 and a fifth inductor L5. The second resonance circuit 92 includes a seventh capacitor C7 and a sixth inductor L6. When the fifth capacitor C5 is connected to the signal source, the first resonance circuit 91 generates the L5 band signal, and the second resonance circuit 92 generates the 2.4 GHz band signal.

For example, parameter values of respective components in the signal generation circuit illustrated in Fig. 9 may be for the fifth capacitor C5 between 0.1 pF - 1 pF, more preferably between 0.3 pF - 0.7 pF and most preferably 0.5 pF. The capacitance for the sixth capacitor C6 is between 4.2 pF to 5.2 pF, more preferably between 4.5 pF - 4.9 pF and most preferably 4.7 pF. The capacitance for the seventh capacitor C7 is between 0.05 pF - 8 pF, more preferably 0.1 pF - 0.5 pF and most preferably 0.3 pF. The inductance of the fifth inductor L5 is between 0.2 nH - 5.2 nH, more preferably 1.7 nH - 3.7 nH and most preferably 2.7 nH. The inductance of the sixth inductor L6 is between 5.5 nH - 10 nH, more preferably between 7 nH - 9 nH and most preferably 8 nH. Most preferably, the parameter values of respective components in the signal generation circuit illustrated in Fig. 9 may be set as Table 4.

**Table 4**

| component | value |
|---|---|
| fifth capacitor C5 | 0.5 pF |
| sixth capacitor C6 | 4.7 pF |
| seventh capacitor C7 | 0.3pF |
| fifth inductor L5 | 2.7 nH |
| sixth inductor L6 | 8 nH |

It should be noted that, the parameter values of respective components (capacitors and inductors) illustrated in Fig. 9 may be flexibly adjusted according to practical situation, which is not limited in the present disclosure.

The present disclosure further provides an electronic device. The electronic device may include an antenna component according to any one the above-mentioned embodiments. With respect to the description of the antenna component in the electronic device, reference may be made to the foregoing embodiments, and details are not elaborated herein.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An antenna component for use in an electronic device, comprising:
a conductive frame (1), comprising a first conductive frame section (12) and a second conductive frame section (13), wherein a slit (11) between the first conductive frame section (12) and the second conductive frame section (13) is configured to implement signal radiation of the antenna component, wherein a feed point (121) is provided on the first conductive frame section (12) near the slit (11), wherein the first conductive frame section (12) comprises an extension portion (122) from the feed point (121) to an end away from the slit (11), and wherein a groove (P) is formed by the extension portion (122) and a first ground element (21); and
a signal generation circuit electronically connected to the feed point (121), and configured to generate an L5 band signal when a signal source is input to the signal generation circuit, such that the groove (P) generates an L1 band signal;
wherein the signal generation circuit is further configured to generate a 2.4GHz band signal when the signal source is input to the signal generation circuit;
the signal generation circuit comprises a first resonance circuit (91), a second resonance circuit (92) and a fifth capacitor (C5), the first resonance circuit (91) is connected to the second resonance circuit (92) in series, and the first resonance circuit (91) is connected between the feed point (121) and the second resonance circuit (92); the second resonance circuit (92) is connected to the fifth capacitor (C5) in series, the first resonance circuit (91) comprises a sixth capacitor (C6) and a fifth inductor (L5), the second resonance circuit (92) comprises a seventh capacitor (C7) and a sixth inductor (L6);
wherein, when the fifth capacitor (C5) is connected to the signal source, the first resonance circuit (91) is configured to generate an L5 band signal, the second resonance circuit (92) is configured to generate a 2.4 GHz band signal.

2. The antenna component according to claim 1, wherein, when the signal source is input to the signal generation circuit, the groove (P) is further configured to generate a 5GHz band signal;
a fundamental mode of the groove (P) is configured to generate the L1 band signal, and a high order mode of the groove (P) is configured to generate the 5GHz band signal.

3. The antenna component according to claim 1, wherein the first ground element (21) comprises at least one of: a frame of the electronic device, a screen module, and a printed circuit board.

4. The antenna component according to claim 1, wherein a length of the groove (P) is no less than 20 mm.

5. An electronic device, comprising the antenna component according to any one of claims 1 to 4.

## Patentansprüche

1. Antennenkomponente zur Verwendung in einer elektronischen Vorrichtung, die aufweist:
einen leitfähigen Rahmen (1), der einen ersten leitfähigen Rahmenabschnitt (12) und einen zweiten leitfähigen Rahmenabschnitt (13) aufweist, wobei ein Spalt (11) zwischen dem ersten leitfähigen Rahmenabschnitt (12) und dem zweiten leitfähigen Rahmenabschnitt (13) dazu ausgebildet ist, eine Signalabstrahlung der Antennenkomponente zu implementieren, wobei ein Einspeisepunkt (121) auf dem ersten leitfähigen Rahmenabschnitt (12) in der Nähe des Spalts (11) vorgesehen ist, wobei der erste leitfähige Rahmenabschnitt (12) ein Verlängerungsteil (122) von dem Einspeisepunkt (121) zu einem von dem Spalt (11) entfernten Ende aufweist, und wobei eine Nut (P) durch das Verlängerungsteil (122) und ein erstes Erdungselement (21) ausgebildet ist; und
einen Signalerzeugungskreis, der mit dem Einspeisepunkt (121) elektronisch verbunden ist und dazu ausgebildet ein, ein L5-Bandsignal zu erzeugen, wenn eine Signalquelle in den Signalerzeugungskreis eingegeben wird, so dass die Nut (P) ein L1-Bandsignal erzeugt;
wobei der Signalerzeugungskreis ferner dazu ausgebildet ist, ein 2,4-GHz-Bandsignal zu erzeugen, wenn die Signalquelle in den Signalerzeugungskreis eingegeben wird;
der Signalerzeugungskreis weist einen ersten Resonanzkreis (91), einen zweite Resonanzkreis (92) und einen fünften Kondensator (C5) aufweist, wobei der erste Resonanzkreis (91) mit dem zweiten Resonanzkreis (92) in Reihe geschaltet ist, und der erste Resonanzkreis (91) zwischen dem Einspeisepunkt (121) und dem zweiten Resonanzkreis (92) verbunden ist; wobei der zweite Resonanzkreis (92) mit dem fünften Kondensator (C5) in Reihe geschaltet ist, der erste Resonanzkreis (91) einen sechsten Kondensator (C6) und einen fünften Induktor (L5) aufweist, der zweite Resonanzkreis (92) einen siebten Kondensator (C7) und einen sechsten Induktor (L6) aufweist;
wobei, wenn der fünfte Kondensator (C5) mit der Signalquelle verbunden ist, der erste Resonanzkreis (91) dazu ausgebildet ist, ein L5-Bandsignal zu erzeugen, und der zweite Resonanzkreis (92) dazu ausgebildet ist, ein 2,4-GHz-Bandsignal zu erzeugen.

2. Antennenkomponente nach Anspruch 1, wobei, wenn die Signalquelle in den Signalerzeugungskreis eingegeben wird, die Nut (P) ferner dazu ausgebildet ist, ein 5-GHz-Bandsignal zu erzeugen;
wobei eine Grundmode der Nut (P) dazu ausgebildet ist, das L1-Bandsignal zu erzeugen, und eine Mode hoher Ordnung der Nut (P) dazu ausgebildet ist, ein 5-GHz-Bandsignal zu erzeugen.

3. Antennenkomponente nach Anspruch 1, wobei das erste Erdungselement (21) zumindest eines aus Folgendem aufweist: einen Rahmen der elektronischen Vorrichtung, ein Bildschirmmodul, und eine Leiterplatte.

4. Antennenkomponente nach Anspruch 1, wobei eine Länge der Nut (P) nicht weniger als 20 mm beträgt.

5. Elektronische Vorrichtung, welche die Antennenkomponente nach einem der Ansprüche 1 bis 4 aufweist.

## Revendications

1. Composant d'antenne destiné à être utilisé dans un dispositif électronique, comprenant :
un cadre conducteur (1), comprenant une première section de cadre conducteur (12) et une seconde section de cadre conducteur (13), dans lequel une fente (11) entre la première section de cadre conducteur (12) et la seconde section de cadre conducteur (13) est configurée pour mettre en œuvre un rayonnement de signal du composant d'antenne, dans lequel un point d'alimentation (121) est prévu sur la première section de cadre conducteur (12) près de la fente (11), dans lequel la première section de cadre conducteur (12) comprend une partie d'extension (122) allant du point d'alimentation (121) à une extrémité éloignée de la fente (11), et dans lequel une rainure (P) est formée par la partie d'extension (122) et un premier élément de masse (21) ; et
un circuit de génération de signal connecté électroniquement au point d'alimentation (121), et configuré pour générer un signal de bande L5 lorsqu'une source de signal est entrée dans le circuit de génération de signal, de telle sorte que la rainure (P) génère un signal de bande L1 ;
dans lequel le circuit de génération de signal est en outre configuré pour générer un signal de bande de 2,4 GHz lorsque la source de signal est entrée dans le circuit de génération de signal ;
le circuit de génération de signal comprend un premier circuit de résonance (91), un second circuit de résonance (92) et un cinquième condensateur (C5), le premier circuit de résonance (91) est connecté au second circuit de résonance (92) en série, et le premier circuit de résonance (91) est connecté entre le point d'alimentation (121) et le second circuit de résonance (92) ; le second circuit de résonance (92) est connecté au cinquième condensateur (C5) en série, le premier circuit de résonance (91) comprend un sixième condensateur (C6) et une cinquième inductance (L5), le second circuit de résonance (92) comprend un septième condensateur (C7) et une sixième inductance (L6) ;
dans lequel, lorsque le cinquième condensateur (C5) est connecté à la source de signal, le premier circuit de résonance (91) est configuré pour générer un signal de bande L5, le second circuit de résonance (92) est configuré pour générer un signal de bande de 2,4 GHz.

2. Composant d'antenne selon la revendication 1, dans lequel, lorsque la source de signal est entrée dans le circuit de génération de signal, la rainure (P) est en outre configurée pour générer un signal de bande de 5 GHz ;
un mode fondamental de la rainure (P) est configuré pour générer le signal de bande L1, et un mode d'ordre supérieur de la rainure (P) est configuré pour générer le signal de bande de 5 GHz.

3. Composant d'antenne selon la revendication 1, dans lequel le premier élément de masse (21) comprend : un cadre du dispositif électronique et/ou un module d'écran et/ou une carte de circuit imprimé.

4. Composant d'antenne selon la revendication 1, dans lequel une longueur de la rainure (P) n'est pas inférieure à 20 mm.

5. Dispositif électronique, comprenant le composant d'antenne selon l'une quelconque des revendications 1 à 4.
